# FASCICULE DE BREVET EUROPEEN

(11) **EP 0 524 031 B1**
(45) Date de publication et mention de la délivrance du brevet: **18.01.1995**
(21) Numéro de dépôt: 92401401.2
(22) Date de dépôt: 21.05.1992
(51) Int. Cl.: E01C 19/10

(54) **Procédé d'obtention à froid d'enrobés denses bitumineux**
Verfahren zur Herstellung von bitumenumhüllten dichten Stoffen
Method for making bitumen coated dense products

(30) Priorité: 19.07.1991 FR 9109190
(43) Date de publication de la demande: 20.01.1993
(73) Titulaire: COLAS S.A., F-92653 Boulogne-Billancourt Cédex (FR)
(72) Inventeur: Clarac, André, F-33650 Saint Morillon (FR); Chambard, René, F-75012 Paris (FR)
(74) Mandataire: Michelet, Alain

(56) Documents cités:
- DE-A- 2 259 407
- FR-A- 2 623 219
- US-A- 4 427 376

## Description

La présente invention concerne un procédé d'obtention à froid d'enrobés denses bitumineux constitués de gros éléments et d'éléments fins.

Dans l'art antérieur, les enrobés denses susceptibles d'être stockés sont généralement obtenus selon une technique à chaud.

Cette technique à chaud implique de chauffer, soit les granulats, soit le liant d'enrobage. Ce dernier est habituellement un bitume fluxé ou fluidifié et n'est jamais un bitume pur.

Le chauffage qui est nécessaire conduit à des coûts de production qui sont importants.

Plus récemment, on a mis en oeuvre un procédé de fabrication à froid d'enrobés denses bitumineux.

Ainsi, FR-A-2 623 219 décrit un procédé pour fabriquer à froid des enrobés denses bitumineux stockables dans lequel on sépare l'enrobage des matériaux en fonction de leur granulométrie.

Plus particulièrement, selon l'enseignement de FR-A-2 623 219, on enrobe tout d'abord les éléments fins de granulométrie 0/2 ou 0/4 mm avec une émulsion cationique de liant bitumineux renfermant du bitume fluidifié.

On procède à un stockage des matériaux ainsi enrobés. On réalise ensuite l'enrobage des gros éléments en utilisant une émulsion cationique de bitume fluxé ou fluidifié différente de celle utilisée pour les éléments fins.

A la fin de la phase d'enrobage des gros éléments, on incorpore les éléments fins préalablement enrobés et qui ont été stockés, et on continue le malaxage pendant quelques secondes pour obtenir à la fin un produit susceptible d'être stocké.

Ce procédé connu donne satisfaction mais impose une étape de mûrissement ou de stockage d'une fraction granulaire, et notamment de la fraction constituée des éléments fins qui ont été tout d'abord enrobés.

Dans la pratique, la période de mûrissement ou de stockage requiert plusieurs jours, et la reprise de cette fraction préalablement enrobée conduit aussi à des coûts de main-d'oeuvre importants.

La présente invention a pour objet de remédier aux inconvénients exposés ci-dessus en proposant un procédé qui supprime la période de mûrissement ou de stockage intermédiaire et assure donc, tant un gain de temps qu'une économie sensible de main-d'oeuvre.

Plus particulièrement, le procédé, selon la présente invention, est un procédé continu ne nécessitant aucune étape intermédiaire de stockage d'une quelconque fraction.

D'un autre côté, le procédé, selon la présente invention, procure des caractéristiques mécaniques améliorées du produit résultant, notamment l'obtention de résistances à la compression particulièrement élevées.

La présente invention se rapporte donc à un procédé d'obtention à froid d'enrobés denses bitumineux constitués de gros éléments et d'éléments fins, qui est caractérisé par un double enrobage selon lequel on ajoute, successivement, dans un malaxeur : les gros éléments, une première émulsion, les éléments fins et une deuxième émulsion, et l'on malaxe l'ensemble selon une durée suffisante pour obtenir un mélange homogène susceptible d'être stocké pendant la période de temps nécessaire.

La présente invention concerne également les caractéristiques ci-après, considérées isolément, ou selon toutes leurs combinaisons techniquement possibles :
- la première émulsion et la deuxième émulsion sont de même composition ;
- les gros éléments sont des éléments de granulométrie comprise dans la gamme de 2 à 31,5 mm, et plus précisément 2/6, 2/10 et 2/14 ;
- les éléments fins sont des éléments de granulométrie comprise dans la gamme de 0 à 6 mm, et plus précisément 0/2 ;
- la première émulsion est un liant de base constitué de bitume pur et de bitume fluidifié 0-1 ;
- le rapport pondéral du bitume pur au bitume fluidifié est compris dans la gamme de 100 : 0 à 60 : 40 ;
- la viscosité du liant de base de la première émulsion est comprise dans la gamme de 100 à 60 000 s, et plus précisément 100 à 300 s ;
- la deuxième émulsion est un liant de base constitué de bitume pur ou d'un mélange de bitume pur et de bitume fluidifié compris dans la gamme de 100 : 0 à 60 : 40, et plus précisément de bitume pur ;
- la viscosité du liant de base de la deuxième émulsion est comprise dans la gamme de 100 à 60 000 s, et plus précisément d'environ 30 000 à 60 000 s ;
Divers avantages et caractéristiques de la présente invention ressortiront de la description détaillée ci-après, faite en regard des dessins annexés, sur lesquels :
- la Figure 1 illustre un procédé selon l'art antérieur ;
- la Figure 2 représente le procédé de l'invention.

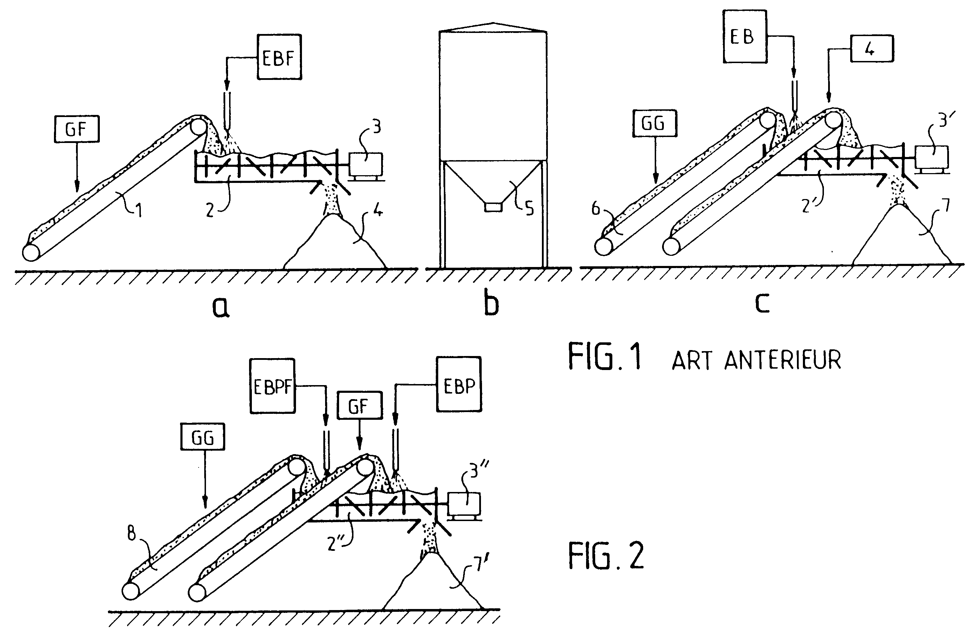

Le procédé de l'art antérieur, selon la Figure 1, comprend une pluralité d'étapes discontinues désignées, respectivement, par a, b et c.

Dans l'étape a, les éléments fins, désignés par GF, sont amenés par l'intermédiaire d'un convoyeur 1 dans un malaxeur 2 actionné par un moteur 3.

Ces éléments fins GF sont enrobés avec une première émulsion de bitume fluidifié, désignée par EBF. Après une durée de malaxage suffisante, on obtient les éléments fins enrobés 4.

Au cours de l'étape suivante b, les éléments fins enrobés GF sont stockés plusieurs jours dans le silo 5 ou en tas à l'air libre.

Dans l'étape c, les gros éléments GG sont amenés par l'intermédiaire d'un convoyeur 6 dans un malaxeur 2' actionné par un moteur 3'. Ces gros éléments GG sont enrobés avec une deuxième émulsion EB, constituée en majeure partie de bitume pur et en quantité mineure de bitume fluidifié.

Dans l'étape c, les éléments fins enrobés 4, qui avaient été stockés à l'air libre ou dans le silo 5 pendant une période de temps atteignant plusieurs jours, sont réintroduits dans le malaxeur 2' avec les gros éléments GG ayant reçu l'application de l'émulsion de bitume EB. A la sortie du malaxeur 2′, il en résulte des enrobés denses bitumineux susceptibles d'être stockés, désignés par la référence 7.

Le procédé de la présente invention est illustré sur la Figure 2. Selon la présente invention, on met en oeuvre un double enrobage dans le malaxeur 2˝ entraîné par le moteur 3˝ en ajoutant, successivement, les gros éléments GG alimentés par le convoyeur 8, la première émulsion EBPF, les éléments fins GF et la deuxième émulsion EBP.

A la sortie du malaxeur 2˝, on obtient, en utilisant l'ajout successif décrit ci-dessus, des enrobés denses bitumineux 7′ qui n'ont pas nécessité un mûrissement ou stockage d'une quelconque fraction granulaire, ni de reprise du matériau.

Le procédé continu de la présente invention procure donc un gain de temps important car, comme on l'a déjà indiqué ci-dessus, il supprime la période de stockage intermédiaire qui était absolument nécessaire avec le procédé connu de fabrication à froid d'enrobés denses bitumineux, selon l'art antérieur.

Le procédé, selon la présente invention, implique également une économie de main-d'oeuvre très importante car il n'y a pas de reprise de la fraction préalablement enrobée, et les caractéristiques mécaniques sont améliorées car les émulsions, utilisées dans la présente invention, contiennent peu de solvant, voire pas du tout si on le désire, ce qui permet l'obtention de résistances à la compression supérieures à celles des enrobés denses bitumineux obtenus à froid, selon la technique de l'art antérieur illustré sur la Figure 1.

Les émulsions de bitumes utilisées dans la présente invention sont, en ce qui concerne la première émulsion, un mélange de bitume pur et de bitume fluidifié 0-1 dans un rapport sensiblement compris entre 1 : 0 et 1 : 1 (bitume pur : bitume fluidifié 0-1), et plus précisément 1 : 0,7 et 1 : 0,4.

La viscosité d'un tel liant de base se situe sensiblement entre environ 150 et 300 s.

La deuxième émulsion utilisée dans la présente invention se compose le plus fréquemment de bitume pur et la viscosité du liant de base est, dans ce cas, sensiblement comprise dans la gamme de 30 000 à 60 000 s.

Les liants de base des émulsions utilisées dans la présente invention sont analogues à ceux des émulsions routières d'enrobage, mais ils sont formulés, de préférence, avec peu de solvant et en sont quelquefois totalement exempts.

La présente invention permet, grâce à un procédé très simple, d'obtenir à un prix très avantageux des enrobés denses bitumineux susceptibles d'être stockés.

L'invention n'est pas limitée aux modes de réalisation représentés et décrits en détail et diverses modifications peuvent aussi être apportées sans sortir de son cadre, en particulier, tout autre solvant, de quelque nature chimique que ce soit, mais plus particulièrement d'origine pétrolière, peut tout aussi bien convenir que le pétrole lampant défini dans la feuille de documentation NF M 15 - 003, et qui correspond à une coupe pétrolière approximativement 170-230° C, qui est le diluant volatil du bitume fluidifié 0-1. A titre d'exemple non limitatif, les fluxants pétroliers résultant des procédés de craquage catalytique, comme les L.C.O. (Light Cycle Oil), conviennent également.

Les signes de référence, insérés après les caractéristiques techniques mentionnées dans les revendications, ont pour seul but de faciliter la compréhension de ces dernières et n'en limitent aucunement la portée.

## Revendications

1. Procédé d'obtention à froid d'enrobés denses bitumineux constitués de gros éléments (GG) et d'éléments fins (GF), caractérisé par un double enrobage selon lequel on ajoute, successivement, dans un malaxeur (2˝) et dans l'ordre suivant, les gros éléments (GG), une première émulsion (EBPF), les éléments fins (GF) et une deuxième émulsion (EBP), et on malaxe l'ensemble selon une durée suffisante pour obtenir un mélange homogène (7′) susceptible d'être stocké pendant la période de temps nécessaire.

2. Procédé selon la revendication 1, caractérisé en ce que la première émulsion (EBPF) et la deuxième émulsion (EBP) sont de même composition.

3. Procédé selon l'une des revendication 1 ou 2, caractérisé en ce que les gros éléments (GG) sont des éléments de granulométrie comprise dans la gamme de 2 à 31,5 mm, notamment 2/6, 2/10 et 2/14.

4. Procédé selon l'une quelconque des revendication 1 à 3, caractérisé en ce que les éléments fins (GF) sont des éléments de granulométrie comprise dans la gamme de 0 à 6 mm, notamment 0/2.

5. Procédé selon l'une quelconque des revendications 1 à 4, caractérisé en ce que la première émulsion (EBPF) est un liant de base constitué de bitume pur ou d'une mélange de bitume pur et de bitume fluidifié 0-1.

6. Procédé selon l'une quelconque des revendication 1 à 5, caractérisé en ce que le rapport pondéral de bitume pur au bitume fluidifié est compris dans la gamme de 100 : 0 à 60 : 40.

7. Procédé selon l'une quelconque des revendications 1 à 6, caractérisé en ce que la viscosité du liant de base de la première émulsion (EBPF) est comprise dans la gamme de 100 à 60 000 s, notamment de 100 à 300 s.

8. Procédé selon l'une quelconque des revendications 1 à 7, caractérisé en ce que la deuxième émulsion (EBP) est un liant de base constitué de bitume pur ou d'un mélange de bitume pur et de bitume fluidifié compris dans la gamme de 100 : 0 à 60 : 40.

9. Procédé selon l'une quelconque des revendications 1 à 8, caractérisé en ce que la viscosité du liant de base de la deuxième émulsion (EBP) est comprise dans la gamme de 100 à 60 000 s, notamment de 30 000 à 60 000 s.

## Claims

1. A method for cold manufacture of bitumen coated dense products comprising coarse particules (GG) and small particules (GF), characterized by
a double coating according to which in the following order the coarse particules (GG), a first emulsion (EBPF), the small particules (GF) and a second emulsion (EBP) are added successively to a mixer (2'') and the whole is mixed for a sufficient period to obtain a homogeneous mix (7') capable of being stored for the necessary period of time.

2. A method according to claim 1, characterized in that the first emulsion (EBPF) and the second emulsion (EBP) are of the same composition.

3. A method according to any one of claims 1 or 2, characterized in that the coarse particles (GG) are elements of particule size included in the range from 2 to 31.5 mm, particularly 2/6, 2/10 and 2/14.

4. A method according to any one of claims 1 to 3, characterized in that the small particules (GF) are elements of particle size included in the range from 0 to 6 mm, particularly 0/2.

5. A method according to any one of claims 1 to 4, characterized in that the first emulsion (EBPF) is a base binder consisting of pure asphalt or of a mixture of pure asphalt and of 0-1 cut-back asphalt.

6. A method according to any one of claims 1 to 5, characterized in that the weight ratio of the pure asphalt to the cut-back asphalt is included in the range from 100:0 to 60:40.

7. A method according to any one of claims 1 to 6, characterized in that the viscosity of the base binder of the first emulsion (EBFP) is included in the range from 100 to 60 000 s, particularly 100 to 300 s.

8. A method according to any one of claims 1 to 7, characterized in that the second emulsion (EBP) is a base binder consisting of pure asphalt or of a mixture of pure asphalt and cut-back asphalt included in the range from 100:0 to 60:40.

9. A method according to any one of claims 1 to 8, characterized in that the viscosity of the base binder of the second emulsion (EBP) is included in the range from 100 to 60 000 s, particularly from 30 000 to 60 000 s.

## Patentansprüche

1. Verfahren zur Herstellung auf kaltem Wege von bitumenumhüllten dichten Stoffen, die aus groben Teilen (GG) und feinen Teilen (GF) bestehen, gekennzeichnet durch ein doppeltes Umhüllen, bei dem nacheinander in einem Mischer (2'') und in der folgenden Reihenfolge die groben Teile (GG), eine erste Emulsion (EBPF), die feinen Teile (GF) und eine zweite Emulsion (EBP) zugegeben werden und das Ganze für eine Zeitdauer durchgearbeitet wird, die ausreicht, um eine homogene Mischung (7') zu erhalten, die geeignet ist, über einen erforderlichen Zeitraum gelagert zu werden.

2. Verfahren nach Anspruch 1, dadurch gekennzeichnet, daß die erste Emulsion (EBPF) und die zweite Emulsion (EBP) die gleiche Zusammensetzung haben.

3. Verfahren nach einem der Ansprüche 1 oder 2, dadurch gekennzeichnet, daß die groben Teile (GG) Teile einer Korngröße im Bereich von 2 bis 31,5 mm, insbesondere, 2/6, 2/10 und 2/17, sind.

4. Verfahren nach einem der Ansprüche 1 bis 3, dadurch gekennzeichnet, daß die feinen Teile (GF) Teile einer Korngröße im Bereich von 0 bis 6 mm, insbesondere 0/2, sind.

5. Verfahren nach einem der Ansprüche 1 bis 4, dadurch gekennzeichnet, daß die erste Emulsion (EBPF) ein Basisbindemittel ist, das aus reinem Bitumen oder aus einer Mischung aus reinem Bitumen und Verschnittbitumen 0-1 besteht.

6. Verfahren nach einem der Ansprüche 1 bis 5, dadurch gekennzeichnet, daß das Gewichtsverhältnis von reinem Bitumen zu Verschnittbitumen im Bereich von 100:0 bis 60:40 liegt.

7. Verfahren nach einem der Ansprüche 1 bis 6, dadurch gekennzeichnet, daß die Viskosität des Basisbindemittels der ersten Emulsion (EBPF) im Bereich von 100 bis 60 000 s, insbesondere von 100 bis 300 s liegt.

8. Verfahren nach einem der Ansprüche 1 bis 7, dadurch gekennzeichnet, daß die zweite Emulsion (EBP) ein Basisbindemittel ist, das aus reinem Bitumen oder einer Mischung aus reinem Bitumen und Verschnittbitumen im Bereich von 100:0 bis 60:40 besteht.

9. Verfahren nach einem der Ansprüche 1 bis 8, dadurch gekennzeichnet, daß die Viskosität des Basisbindemittels der zweiten Emulsion (EBP) im Bereich von 100 bis 60 000 s, insbesondere von 30 000 bis 60 000 s liegt.
